# EUROPEAN PATENT SPECIFICATION

(11) **EP 1 178 250 B1**
(45) Date of publication and mention of the grant of the patent: **06.09.2006**
(21) Application number: 01118301.9
(22) Date of filing: 27.07.2001
(51) Int. Cl.: F16K 21/06, F16K 21/12

(54) **Self-closing valve**
Selbstschliessendes Ventil
Soupape à fermeture automatique

(30) Priority: 01.08.2000 IT MI001792
(43) Date of publication of application: 06.02.2002
(73) Proprietor: CRS S.P.A., 28010 Fontaneto D'Agogna, NO (IT)
(72) Inventor: Baki, Gyozo Janos, 28060 Cureggio (Novara) (IT)
(74) Representative: Cicogna, Franco

(56) References cited:
- EP-A- 1 039 189
- DE-A- 3 338 402
- US-A- 2 613 688
- US-A- 5 427 351

## Description

### BACKGROUND OF THE INVENTION

The present invention relates to a timed faucet construction.

More specifically, the present invention relates to automatic timed closure faucets, comprising a directly controlled valve, of a push-button type, or of a lever type, including an inner chamber the filling of which, through a calibrated hole, adjusts the closing speed of the faucet, performed by an abutment spring operating on the push-button, as knows from DE-A1-3338402 for example.

The faucets of the above mentioned type operates quite satisfactorily.

However, the operations necessary for adjusting the faucet flow-rate and opening time, are very complex, since they require the faucet to be disassembled and the fluid supply upstream of the faucet to be shut-off.

### SUMMARY OF THE INVENTION

Accordingly, the aim of the present invention is to provide such a timed faucet construction, allowing to adjust, in a very simple manner, and without disassembling the faucet, the water outlet time and the water flow-rate.

Within the scope of the above mentioned aim, a main object of the present invention is to provide such a timed faucet construction allowing to adjust, in an independent manner, the water outlet time and flow-rate.

Another object of the present invention is to provide such a timed faucet construction comprising a compact cartridge, including all the elements necessary for the operation of the faucet, and which can be easily replaced without requiring any additional elements.

According to one aspect of the present invention, the above mentioned aim and objects, as well as other objects, which will become more apparent hereinafter, are achieved by a timed faucet construction according to claim 1.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example, in the accompanying drawings, where:
Figure 1 is an elevation view, partially cross-sectioned, of the cartridge for timed faucets, according to the present invention;

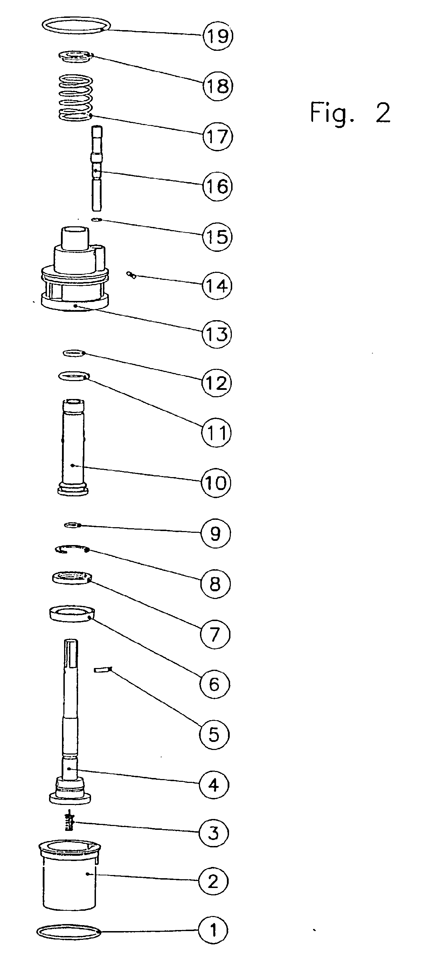

Figure 2 is an exploded view of the timed faucet cartridge;
Figure 3 is an elevation view, on an enlarged scale, and as cross-sectioned, of a faucet, including a faucet cartridge according to the present invention;

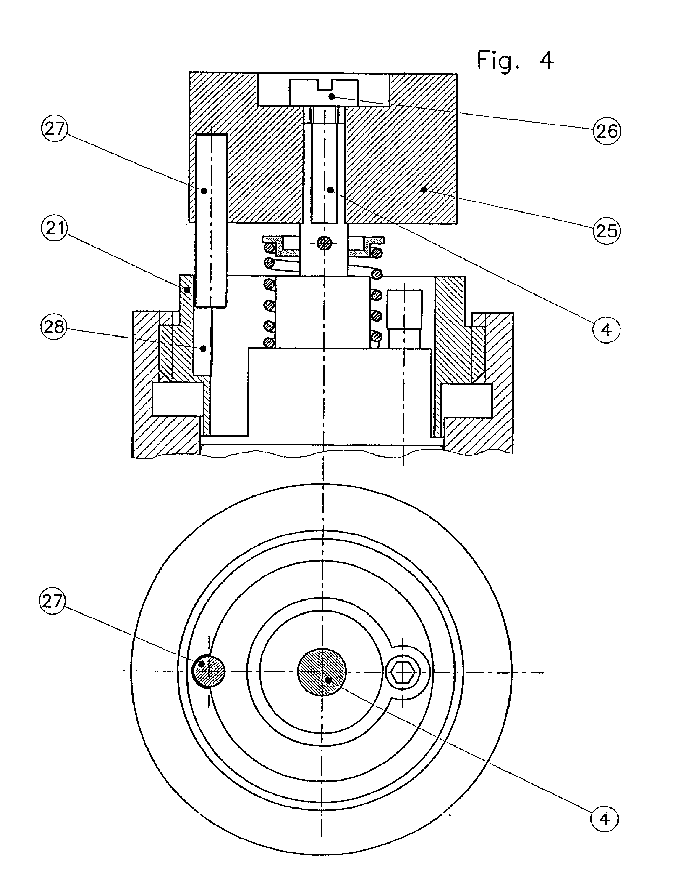

Figure 4 is a further elevation top plan view, as cross-sectioned, of an anti-turning device for preventing a cartridge push-button from turning;
Figure 5 is a cross-sectioned elevation view of the timed faucet cartridge according to the present invention, being shown in a maximum flow-rate condition thereof;
Figure 6 is a schematic view, similar to the preceding view, but in the minimum flow-rate condition;
Figure 7 is an elevation view, as partially cross-sectioned, of the timed faucet cartridge according to the present invention, being shown in a maximum stroke or displacement and closing condition thereof;
Figure 8 is a schematic view, similar to the preceding view, but with the cartridge in the maximum stroke or displacement and maximum opening position thereof;
Figure 9 is a schematic view, similar to the preceding view, of that same timed faucet cartridge, but in the minimum stroke or displacement condition and closing position thereof; and
Figure 10 is an elevation view, as partially cross-sectioned, of the timed faucet cartridge according to the present invention, shown in the minimum stroke or displacement condition thereof and in the opening position thereof.

### DESCRIPTION OF THE PREFERRED EMBODIMENTS

With reference to the number references of the above mentioned figures, the timed faucet construction, according to the present invention, comprises a timed faucet cartridge which can be engaged in a faucet body 20, having a water inlet 22 and a water outlet 23.

The cartridge construction comprises a cartridge body 13, fixed to the faucet body by a fixing ring nut 21 and bearing, at the bottom thereof, a socket 2, coupled to the body 13 through a first sealing gasket 1 and a second sealing gasket 19.

The body 13 supports a driving shaft or spindle 4, engaged in a bushing 10 for opening and/or closing the water flow, through the interposition of a sealing gasket 9.

The bushing 10 is provided, in turn, with a top sealing gasket 12 arranged between said bushing 10 and body 13, and a sealing or shut-off gasket 11, adapted to lock the water flow by abutment against said body 13.

The driving shaft 4 comprises, at the top thereof, a fixing element for fixing a spring 18, said fixing element being locked by a detent element 5 designed for locking a spring 17 in abutment against an abutment element on the body 13.

The top end portion of the driving shaft 4 is fixed through a fixing screw 26 to a push-button 25.

The bottom end portion of the driving shaft 4 is enlarged or tapered and comprises a sealing gasket 6, locked by a sealing ring element for the gasket 7 and a fixing ring (seeger) 8.

A cleaning spring 3 engages an axial hole for allowing water to pass therethrough.

In parallel with the driving shaft 4 extension, extends a flow-rate adjusting element 16, being screwed to the body 13 and fixed by a fixing pin 14, the sealing between the adjusting element 16 and body 13 being assured by a gasket 15.

The bottom end portion of the flow-rate adjusting element 16 interferes against the water inlet 24, into the cartridge, thereby adjusting the water flow rate.

An anti-turning device, provided for preventing the push-button 25 from turning, comprises an anti-turning pin 27, coupled to the push-button 25 and engaged in a pin seat 28 formed in the ring-nut 21.

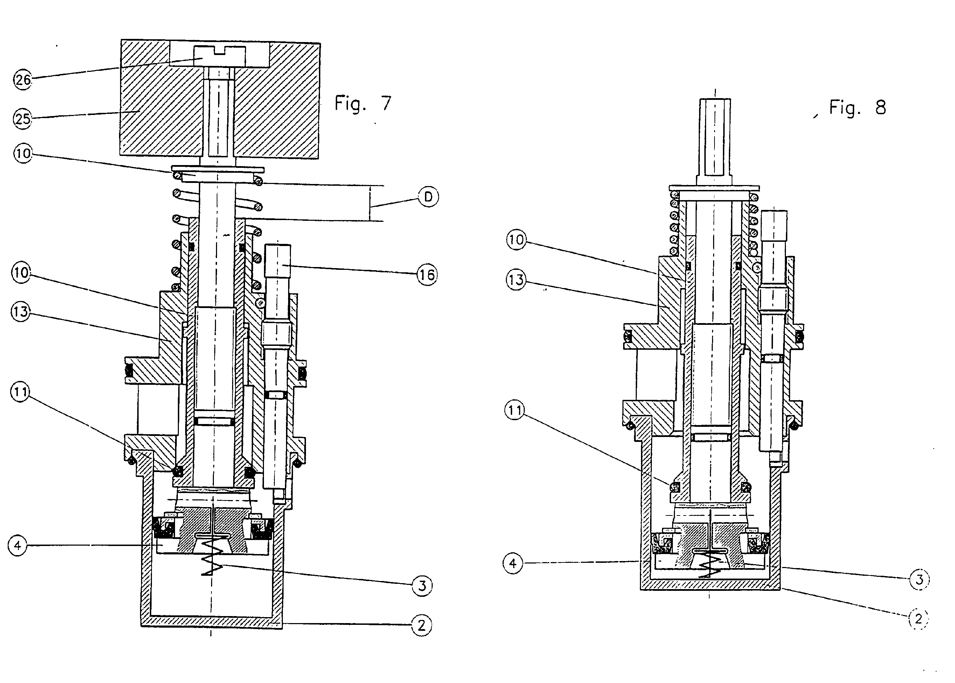

Figure 7 shows the subject construction in a rest or standby condition thereof, without any supplying of water, with the driving shaft 4 being arranged in a raised position thereof.

The distance D between the spring 18 fixing element and the body 13 is maximum and the driving shaft 4 can engage all the available stroke or displacement.

Figure 8 illustrates the subject construction in the working condition thereof, with the maximum required closing time.

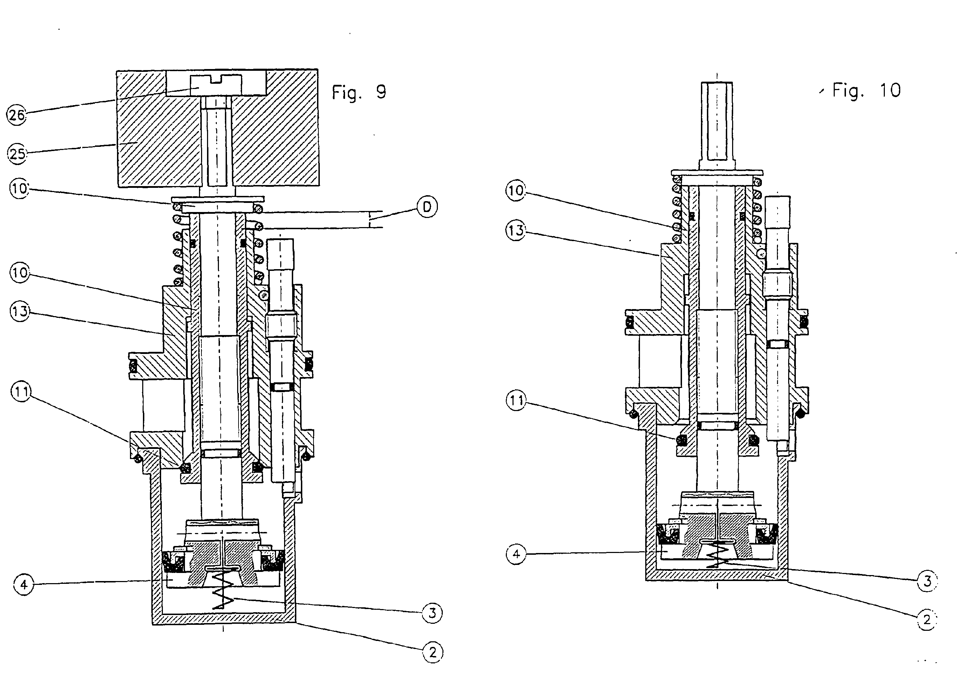

Figure 9 shows the construction in its rest condition, without any water supply, with the driving shaft 4 shown in its lowered position.

The distance D between the spring 18 fixing element and the body 13 is minimum and the driving shaft 4 cannot engage all the available displacement or stroke.

Figure 10 shows the subject construction in its working condition, with a minimum required operating time.

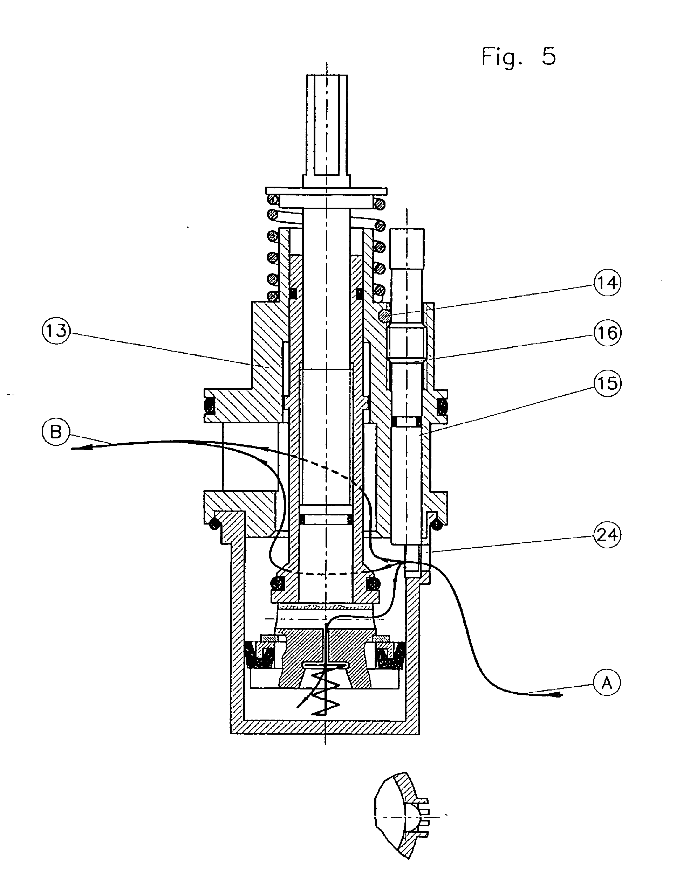

The faucet flow-rate can be adjusted by the adjusting screw 16, so as to change the closing time of said faucet, and it will pass from a maximum value, in which, with the faucet in a rest position, the driving shaft 4 is arranged in a raised position (figure 7) and the flow-rate adjusting screw 16 (figure 5) is in its raised position, at a minimum value.

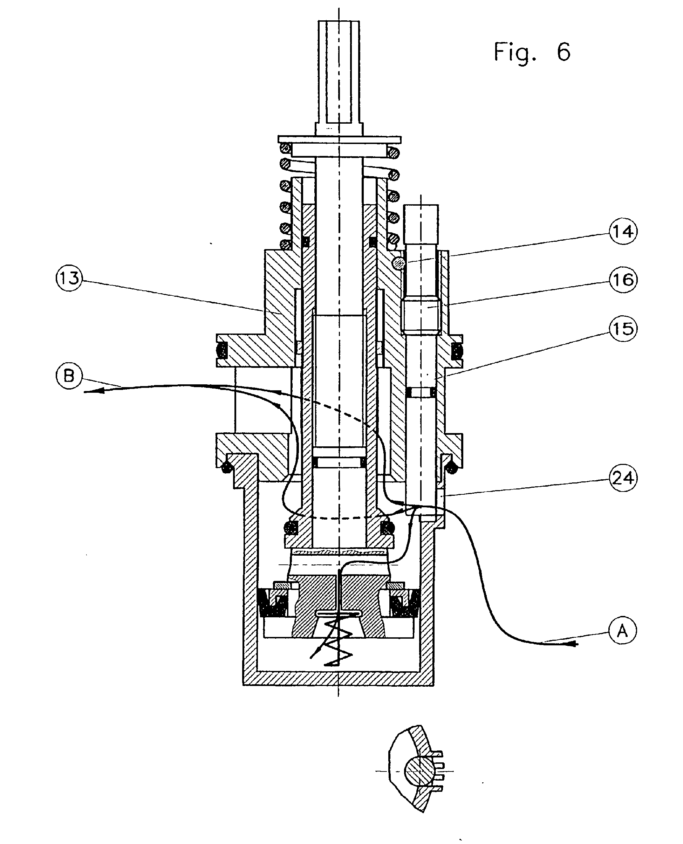

This result is achieved as the faucet is in its rest position, the driving shaft 4 is in its lowered position (figure 9), the flow-rate adjusting screw 16 (figure 6) is in a lowered position.

The opening time adjustment is carried out in the following manner.

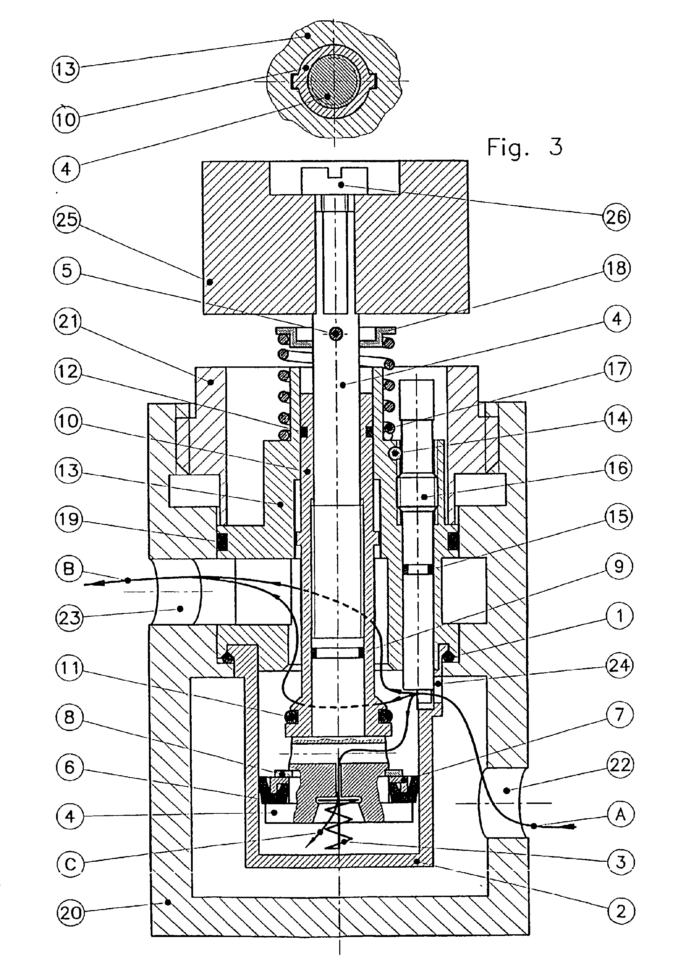

Starting from a rest condition, the water outlet being maximum, which is obtained by a fully depressing the push-button 25 (figure 3), it is possible to loose the push-button 25 locking screw 26, raise the push-button 25, thereby freeing the driving shaft 4.

Then, by said push-button 25 or a suitable tool, it is possible to clockwise turn the driving shaft 4, to reduce the cartridge opening time.

According to the displacement or stroke transmitted to the driving shaft 4, different closing times would be obtained.

In order to change the driving shaft stroke or displacement 4, said driving shaft 4 is either screwed on or off with respect to the opening and/or closing bushing 10.

Upon having found the opening time desired or target value, the push-button 25 and locking screw 26 are again reset.

This operation, which, as it would be apparent, is very simple and easy, is carried out with the cartridge mounted on the faucet and without the need of closing the water inlet upstream of the faucet.

The adjustment of the water flow rate is performed in the following manner.

By a socket wrench, screwdriver or other suitable tool, it is possible to clockwise turn the flow-rate adjusting screw 16 in order to reduce the flow-rate.

This operation, which would be very simple and easy, is carried out with the cartridge mounted on the faucet and without the need of closing the water inlet upstream of the faucet.

Each time the push-button 25 is pressed (figure 8), up to the end of stroke condition thereof, the spring 3 will contact the socket 2 so as to allow the cartridge water passage C clean.

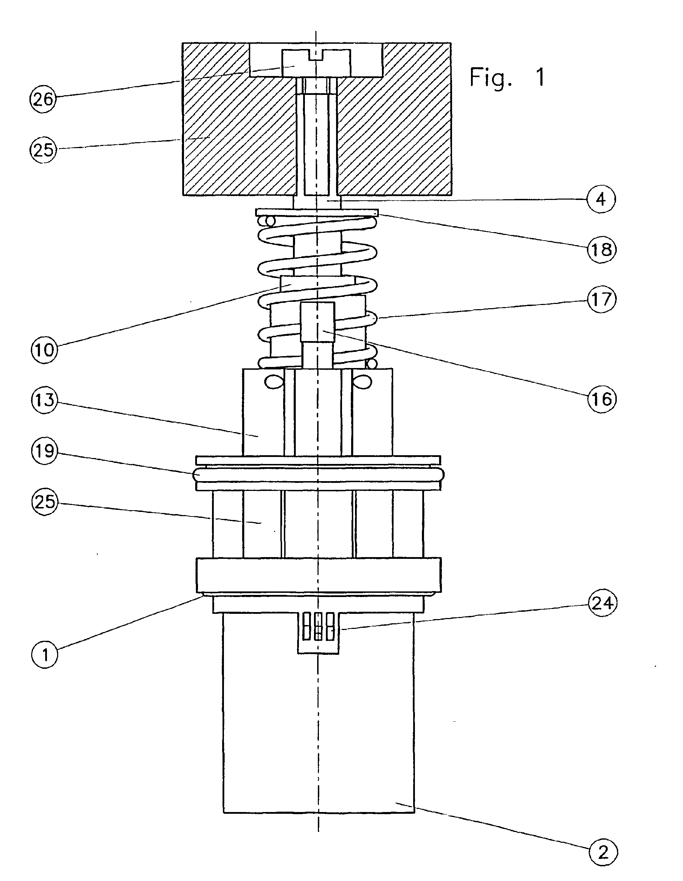

Moreover, the socket 2 is advantageously provided with a filter (indicated by the reference number 24 in figure 1) for filtering-out the coarse impurities.

The push-button 25, in turn, comprises an anti-turning device including an anti-turning pin 27, rigid with said push-button 25 and designed for preventing, by engaging the seat 28, the push-button 25 from turning during a normal operation, thereby the closing time cannot be accidentally modified.

It has been found, in actual practice, that the invention fully achieves the intended aim and objects.

In fact, a cartridge construction for timed faucets has been provided, which allows to easily and quickly modify the opening time and flow rate, without the need of disassembling the faucet.

In practicing the invention, the used materials, as well as the contingent size and shapes, can be any, depending on requirements and the status of the art.

## Claims

1. A timed faucet construction comprising a timed faucet cartridge which can be engaged in a faucet body (20) having a water inlet (22) and a water outlet (23) said cartridge comprising a cartridge body (13), fixed to said faucet body (20) and a vertically displaceable driving shaft (4) for opening and shutting off the water flow, **characterized in that** said driving shaft (4) is threaded to a water flow adjusting bushing (10) provided with a shut off gasket (11), said gasket being vertically displaceable with respect to the driving shaft by means of the thread, so that the opening time of said faucet can be changed, and an outward operated flow-rate adjusting element (16) which is arranged in parallel to said driving shaft (4) and which can be driven, outside of said faucet and without disassembling any parts of said faucet, to change the water inlet flow-rate.

2. A faucet construction, according to claim 1, **characterized in that** said flow rate adjusting element (16) is threaded to said faucet body (20) and fixed to said faucet body (20) by a fixing pin (14), a bottom end portion of said flow-rate adjusting element (16) being adapted to interfere against said water inlet (22).

3. A faucet construction, according to claim 1, **characterized in that** said cartridge has a cartridge body (23) coupled to said faucet body (20) by a fixing ring-nut (21) and comprises, at the bottom thereof, a socket (2) coupled to said cartridge body (13) through a first (1) and second (19) sealing gaskets.

4. A faucet construction, according to claim 1, **characterized in that** said cartridge body (13) supports said driving shaft (4) through a further sealing gasket (9) and that said bushing (10) further comprises a top sealing gasket (10) arranged between said bushing (10) and said cartridge body (13), said driving shaft (4) comprising, at a top thereof, a fixing element (18) for fixing a spring (17), said fixing element being locked by a detent element (5) designed for locking said spring (17) in abutment against said cartridge body (13).

5. A faucet construction, according to claims 1 and 4, **characterized in that** saidd top portion of said driving shaft (4) is fixed to a push-button (25) by a fixing screw (26).

6. A faucet construction, according to claim 1, **characterized in that** said driving shaft (4) has an enlarged bottom end portion comprising yet another sealing gasket (6) locked by a locking ring element, and a fixing seeger ring element (8), a cleaning spring (3) for engaging in a water flow axial hole being moreover provided.

7. A faucet construction, according to one or more of the preceding claims, **characterized in that** said timed faucet construction comprises an anti-turning device for preventing said push-button (25) from turning, said anti-turning device including an anti-turning pin (27) coupled to said push-button (25) and engaged in a pin seat (28) formed in said fixing ring-nut.

## Patentansprüche

1. Zeitgesteuerte Wasserhahnvorrichtung mit einer zeitgesteuerten Hahnpatrone, die in einen Hahnkörper (20) eingesetzt werden kann, der einen Wassereinlass (22) und einen Wasserauslass (23) aufweist, wobei die Patrone einen Patronenkörper (13), der an dem Hahnkörper (20) befestigt ist, und eine vertikal verschiebbare Antriebswelle (4) zum Öffnen und Absperren des Wasserflusses umfasst, **dadurch gekennzeichnet, dass** die Antriebswelle (4) an eine Wasserdurchflusseinstellbuchse (10) geschraubt ist, die mit einer Absperrdichtung (11) versehen ist, wobei diese Dichtung relativ zu der Antriebswelle mittels des Gewindes vertikal verschiebbar ist, so dass die Öffnungsdauer des Wasserhahnes verändert werden kann, und mit einem von außen zu bedienenden Durchflussmengenregelelement (16) versehen ist, das parallel zu der Antriebswelle (4) angeordnet ist und das von außerhalb des Wasserhahnes und ohne Demontage von Teilen des Wasserhahnes angetrieben werden kann, um die Wassereinlassflussmenge zu ändern.

2. Wasserhahnvorrichtung nach Anspruch 1, **dadurch gekennzeichnet, dass** das Durchflussmengenregelelement (16) an den Hahnkörper (20) angeschraubt ist und an dem Hahnkörper (20) mittels eines Befestigungsstiftes (14) befestigt ist, wobei ein unterer Endabschnitt des Durchflussmengenregelelements (16) dafür konfiguriert ist, sich behindernd gegen den Wassereinlass (22) zu schieben.

3. Wasserhahnvorrichtung nach Anspruch 1, **dadurch gekennzeichnet, dass** die Patrone einen Patronenkörper (23) aufweist, der mittels einer Befestigungsringmutter (21) mit dem Hahnkörper (20) verbunden ist und der an seinem unteren Ende eine Hülse (2) umfasst, die über ein erstes (1) und ein zweites (19) Dichtungselement mit dem Patronenkörper (13) verbunden ist.

4. Wasserhahnvorrichtung nach Anspruch 1, **dadurch gekennzeichnet, dass** der Patronenkörper (13) die Antriebswelle (4) über ein weiteres Dichtungselement (9) stützt und dass die Buchse (10) des Weiteren ein oberes Dichtungselement (10) umfasst, das zwischen der Buchse (10) und dem Patronenkörper (13) angeordnet ist, wobei die Antriebswelle (4) an einer Oberseite ein Befestigungselement (18) zum Befestigen einer Feder (17) umfasst, wobei das Befestigungselement durch ein Arretierungselement (5) verriegelt ist, das dafür konfiguriert ist, die Feder (17) gegen den Patronenkörper (13) stoßend zu verriegeln.

5. Wasserhahnvorrichtung nach den Ansprüchen 1 und 4, **dadurch gekennzeichnet, dass** der obere Abschnitt der Antriebswelle (4) mittels einer Befestigungsschraube (26) an einer Drucktaste (25) befestigt ist.

6. Wasserhahnvorrichtung nach Anspruch 1, **dadurch gekennzeichnet, dass** die Antriebswelle (4) einen vergrößerten unteren Endabschnitt aufweist, der noch ein weiteres Dichtungselement (6), das durch ein Verriegelungsringelement verriegelt ist, und ein Befestigungs-Seegerringelement (8) umfasst, wobei außerdem noch eine Reinigungsfeder (3) zur Aufnahme in einem axialen Wasserflussloch vorhanden ist.

7. Wasserhahnvorrichtung nach einem der vorangehenden Ansprüche, **dadurch gekennzeichnet, dass** die zeitgesteuerte Wasserhahnvorrichtung eine Drehverhinderungseinrichtung aufweist, die verhindert, dass sich die Drucktaste (25) dreht, wobei die Drehverhinderungseinrichtung einen Drehverhinderungsstift (27) enthält, der mit der Drucktaste (25) verbunden ist und in einem Stiftsitz (28) aufgenommen ist, der in der Befestigungsringmutter ausgebildet ist.

## Revendications

1. Conception de robinet de puisage synchronisé comprenant une cartouche de robinet de puisage synchronisé pouvant être emboîtée dans un corps de robinet (20) comportant une entrée d'eau (22) et une sortie d'eau (23), ladite cartouche comprenant un corps de cartouche (13) fixé audit corps du robinet (20) et un arbre d'entraînement (4) mobile verticalement afin d'ouvrir et de fermer le débit d'eau, **caractérisée en ce que** ledit arbre d'entraînement (4) est fileté en direction d'une douille de palier de réglage du débit d'eau (10), muni d'un joint de fermeture (11), ledit joint étant mobile verticalement par rapport à l'arbre d'entraînement à l'aide du filetage, de façon à ce que le temps d'ouverture dudit robinet de puisage puisse être modifié, et d'un élément de réglage du débit actionné de l'extérieur (16) parallèle audit arbre d'entraînement (4) et qui peut être entraîné, à l'extérieur dudit robinet de puisage et sans démonter les éléments dudit robinet de puisage, afin de modifier le débit d'entrée de l'eau.

2. Conception de robinet de puisage selon la revendication 1, **caractérisée en ce que** ledit élément de réglage du débit (16) est fileté en direction dudit corps de robinet (20) et fixé audit corps de robinet (20) à l'aide d'une clavette de fixation (14), une partie d'extrémité inférieure dudit élément de réglage du débit (16) étant adapté pour agir contre ladite entrée d'eau (22).

3. Conception de robinet de puisage selon la revendication 1, **caractérisée en ce que** ladite cartouche comprend un corps de cartouche (23) couplé audit corps de robinet (20) à l'aide d'une gorge annulaire de fixation (21) et comprend, au niveau de sa partie inférieure, un manchon (2) couplé audit corps de cartouche (13) par l'intermédiaire d'un premier (1) et d'un deuxième (19) joints d'étanchéité.

4. Conception de robinet de puisage selon la revendication 1, **caractérisée en ce que** ledit corps de cartouche (13) supporte ledit arbre d'entraînement (4) par l'intermédiaire d'un autre joint d'étanchéité (9) et **en ce que** ladite douille de palier (10) comprend en outre un joint d'étanchéité supérieur (10) disposé entre ladite douille de palier (10) et ledit corps de cartouche (13), ledit arbre d'entraînement (4) comprenant, au niveau de sa partie supérieure, un élément de fixation (18) pour fixer un ressort (17), ledit élément de fixation étant bloqué par un élément de détente (5) conçu pour bloquer ledit ressort (17) en butée contre ledit corps de cartouche (13).

5. Conception de robinet de puisage selon les revendications 1 et 4, **caractérisée en ce que** ladite partie supérieure dudit arbre d'entraînement (4) est fixée à un bouton-poussoir (25) à l'aide d'une vis de fixation (26).

6. Conception de robinet de puisage selon la revendication 1, **caractérisée en ce que** ledit arbre d'entraînement (4) présente une partie d'extrémité inférieure élargie comprenant un autre joint d'étanchéité (6) bloqué à l'aide d'un élément annulaire de blocage et un élément annulaire de fixation Seeger (8), un ressort de nettoyage (3) s'emboîtant dans un trou axial par rapport à l'écoulement d'eau étant également prévu.

7. Conception de robinet de puisage selon l'une ou plusieurs des revendications précédentes, **caractérisée en ce que** ladite conception de robinet de puisage synchronisé comprend un dispositif anti-rotation afin d'empêcher ledit bouton-poussoir (25) de tourner, ledit dispositif anti-rotation comprenant une clavette anti-rotation (27) couplée audit bouton-poussoir (25) et insérée dans un logement de clavette (28) aménagé dans ladite gorge annulaire de fixation.
